Europäisches Patentamt

European Patent Office

Office européen des brevets

(19)

(11) Veröffentlichungsnummer: **0 131 216
B1**

# (12) EUROPÄISCHE PATENTSCHRIFT

(45) Veröffentlichungstag der Patentschrift:
28.10.87

(21) Anmeldenummer: **84107507.0**

(22) Anmeldetag: **28.06.84**

(51) Int. Cl.⁴: **G 02 F 1/137**

(54) Flüssigkristallanzeige.

(30) Priorität: **12.07.83 CH 3819/83
28.10.83 CH 5835/83**

(43) Veröffentlichungstag der Anmeldung:
**16.01.85 Patentblatt 85/3**

(45) Bekanntmachung des Hinweises auf die Patenterteilung:
**28.10.87 Patentblatt 87/44**

(84) Benannte Vertragsstaaten:
**AT BE CH DE FR GB IT LI NL SE**

(56) Entgegenhaltungen:
**DE - A - 2 747 147
FR - A - 2 416 519
GB - A - 2 076 554
US - A - 3 656 834
US - A - 4 143 947**

**PATENTS ABSTRACTS OF JAPAN, Band 6, Nr. 233
(156)[111], 19. November 1983;
Journal "APPLIED PHYSICS", 53 (1982) S.8599-8606**

(73) Patentinhaber: **BBC Brown Boveri AG, CH-5401 Baden
(CH)**

(72) Erfinder: **Amstutz, Hermann, Bruggerstrasse 13,
CH-5507 Mellingen (CH)**
Erfinder: **Heimgartner, Dieter, Pilgerstrasse 25,
CH-5400 Baden (CH)**
Erfinder: **Kaufmann, Meinolph, Moosstrasse 11,
CH-5406 Baden-Rütihof (CH)**
Erfinder: **Scheffer, Terry J., Dr., Dipl.-Phys.,
Höhenstrasse 4, CH-8127 Forch (CH)**

ACTORUM AG

## Beschreibung

Technisches Gebiet

Die Erfindung betrifft eine Flüssigkristallanzeige, welche einen nematischen Flüssigkristall mit positiver dielektrischer Anisotropie und verdrillter Konfiguration aufweist, sowie einen chiralen Zusatz und mindestens einen Polarisator. Die Trägerplatten der Anzeigezelle weisen Orientierungsschichten auf, von denen mindestens eine in der angrenzenden Flüssigkristallschicht einen Anstellwinkel von mehr als 5° bewirkt. Die Schichtdicke des Flüssigkristalls ist kleiner als 10 µm.

Stand der Technik

Eine derartige Anzeige ist bekannt aus J. Appl. Phys. 53, Dec. 1982, 8599–8606 (entsprechend GB-A 2 087 583). Der Flüssigkristall in der bekannten Anzeige ist um 360° verdrillt und der Anstellwinkel liegt bei 35°. Durch die hohe Verdrillung wird ein Bistabilitätseffekt erzielt derart, dass für eine anliegende Haltespannung zwei unterschiedlich verdrillte Flüssigkristallkonfigurationen existent sind. Das Umschalten von einer Konfiguration in die andere erfolgt durch kurzzeitiges Erhöhen oder Erniedrigen der Haltespannung. Die Änderung der optischen Eigenschaften wird mittels gekreuzter Polarisatoren unter Verwendung des Schadt-Helfrich-Effekts (Appl. Phys. Lett. 18 (1971) 127) sichtbar gemacht, das heisst, die Orientierungsrichtungen der Orientierungsschichten stehen entweder parallel oder senkrecht zur Schwingungsrichtung der Polarisatoren, und das Produkt aus der Flüssigkristallschichtdicke d und der Doppelbrechung $\Delta$ n ist gross gegen die Wellenlänge des Lichts. Die chirale Dotierung ist so gewählt, dass sich ein Verhältnis der Schichtdicke d zur Ganghöhe p der Verdrillung von etwa 0,98 ergibt. Das Hauptinteresse liegt im Bereich 0,95 bis 1,10. Oberhalb 1,15 verschwindet die Bistabilität, und unterhalb 0,95 werden die Schaltzeiten zu lang. Die Schichtdicke d beträgt 15 µm. Die in der Publikation beschriebenen Messungen gehen bis d/p = 0,9. Es wird auch ein Wert von d/p = 0,750 erwähnt, und es werden Überlegungen zu einer Zelle mit d = 7 µm angestellt.

Die bekannte Anzeige wird derart angesteuert, dass zeilenweise geschrieben wird. Da sie ständig aufgefrischt werden muss, können nur wenige Zeilen geschrieben werden. Das bedeutet, dass der Multiplexgrad niedrig ist und eine grosse Punktmatrixanzeige nicht realisierbar ist.

In US-A-4 143 947 wird eine Flüssigkristallanzeige beschrieben, in welcher die Abklingzeit nach einer elektrischen Aktivierung reduziert werden soll. Der Flüssigkristall weist eine verdrillte Konfiguration auf, die durch um 90° gegeneinander verdrehte Orientierungsschichten an den Zellenplatten bewirkt wird. Es ist eine chirale Dotierung vorgesehen derart, dass sich eine natürliche Ganghöhe p zwischen d und 4 d (d = Schichtdicke) ergibt. Dadurch entstehen Verdrillungswinkel von 90° oder 270°. Die dielektrische Anisotropie ist positiv, und die Änderung der optischen Eigenschaften beim Anlegen einer elektrischen Spannung wird mittels des Schadt-Helfrich-Effekts sichtbar gemacht. Die Flüssigkristallschichtdicke beträgt 12,5 µm.

Die beschriebene Anzeige weist in bezug auf Multiplexierbarkeit gegenüber den konventionellen Flüssigkristallanzeigen des Schadt-Helfrich-Typs keine Vorteile auf. Sie hat also insbesondere eine relativ flache Kennlinie und eine starke Sichtwinkelabhängigkeit. Für Grossdisplays mit hoher Informationsdichte ist deshalb auch sie nicht geeignet.

Schliesslich ist noch aus JP-A-57-133 438 eine Flüssigkristallanzeige bekannt, die einen Verdrillungswinkel von 270° aufweist. Die optischen Änderungen beim Anlegen einer elektrischen Spannung werden mittels des «Guest-host-Effektes» (Heilmeier et al. in «Molecular Crystals and Liquid Crystals» 1969, S. 293–304 bzw. Appl. Phys. Lett. 1 Aug. 1968, 91, 92) sichtbar gemacht, das heisst der Flüssigkristall ist mit einem dichroitischen Farbstoff dotiert, und die Zelle ist mit einem Eintrittspolarisator versehen, dessen Schwingungsrichtung parallel zur Orientierungsschicht ist.

Auch diese bekannte Anzeige ist für hohe Multiplexgrade ungeeignet, u.a. wegen eines zu geringen Kontrastes.

Darstellung der Erfindung

Es ist Aufgabe der Erfindung, eine Flüssigkristallanzeige anzugeben, die nach einem konventionellen Multiplexverfahren (bevorzugt gemäss IEEE Trans. El. Dev. ED-21, 1974, S. 146–155) mit einem hohen Multiplexgrad ansteuerbar ist und einen grossen Sichtwinkelbereich bei hohem Kontrast aufweist.

Dies wird bei einer Anzeige der eingangs beschriebenen Art primär durch die folgenden Elemente erreicht:

– Die Verdrillung $\Phi$ des Flüssigkristalls ist dem Betrage nach gleich oder grösser als 180° und kleiner als 360°.

– Die Dotierung mit dem chiralen Zusatz ist derart, dass d/p = 0,50 . . . 0,95.

– Die Schwingungsrichtung mindestens des vorderen Polarisators bildet mit der Orientierungsrichtung der vorderen Orientierungsschicht einen derartigen Winkel, dass das ursprünglich linear polarisierte Licht durch die Verdrillung $\Phi$ und die Doppelbrechung $\Delta$ n des Flüssigkristalls je nach anliegender Betriebsspannung unterschiedlich elliptisch polarisiert und der Kontrast der Anzeige optimiert ist.

– Das Umschalten der Anzeige erfolgt in für Multiplexansteuerungen üblicher Weise durch den direkten Übergang von einer ersten zu einer zweiten Betriebsspannung, wobei beide Betriebsspannungen ausserhalb eines etwaigen Bistabilitätsbereich liegen.

– Über die Sichtfläche der Anzeige sind Abstandshalter verteilt.

Die Erfindung beruht zunächst auf der Erkenntnis, dass der in der oben besprochenen Publikation beschriebene Bistabilitätseffekt hinsichtlich seines Spannungsbereiches durch eine Verringerung der Verdrillung Φ, verbunden mit einer geeigenten Verringerung auch des Verhältnisses d/p und des Anstellwinkels, derart eingeengt wird, dass mit Ansteuerspannungen ausserhalb dieses Bereichs ein sehr hoher Multiplexgrad erreicht werden kann.

Des weiteren beruht die Erfindung auf der Idee, die optischen Änderungen der Anzeige durch Ausnutzung der Doppelbrechung des Flüssigkristalls sichtbar zu machen, indem durch die besondere Orientierung des Eintrittspolarisators elliptisch polarisiertes Licht erzeugt wird, das nach seinem Durchtritt durch den Flüssigkristall je nach der anliegenden Betriebsspannung einen unterschiedlichen Polarisationszustand aufweist, der dann besonders empfindlich detektiert werden kann. Da der Polarisationszustand auf der Interferenz der beim Eintritt erzeugten beiden Lichtwellen beruht, müssen die über die Sichtfläche verteilten Abstandshalter für eine sehr konstante Schichtdicke des Flüssigkristalls sorgen.

Anzeigen nach der Erfindung weisen sehr steile Kennlinien auf, und es können sehr hohe Multiplexraten bei hohem Kontrast und grossem Blickwinkelbereich sowie schnellen Schaltzeiten erreicht werden. Sie sind damit hervorragend für grosse Punktmatrixanzeigen geeignet.

Kurze Beschreibung der Zeichnungen

Nachfolgend wird die Erfindung anhand von in Zeichnungen dargestellten Ausführungsformen näher erläutert. Es zeigt:

Fig. 1 einen Querschnitt einer erfindungsgemässen Flüssigkristallanzeige,

Fig. 1a einen Ausschnitt einer erfindungsgemässen Flüssigkristallanzeige mit internem Reflektor,

Fig. 2 Kurven mit der gesamten Verdrillung Φ des Flüssigkristalls als Parameter, in einem Diagramm mit der Betriebsspannung U und dem Verkippungswinkel θ in der Mitte der Anzeigezelle als Variablen,

Fig. 3 Kontrastkurven für eine reflexive Anzeigezelle mit zwei Polarisatoren,

Fig. 4 die schematische Anordnung der Polarisatoren in einer Flüssigkristallanzeige nach Fig. 1 für ein erstes Betriebsverfahren (gelber Mode),

Fig. 5 eine Fig. 4 entsprechende Anordnung für ein zweites Betriebsverfahren (blauer Mode),

Fig. 6 das in einer Anordnung nach Fig. 4 gemessene Kontrastverhältnis CR in Abhängigkeit von der Polarisatorstellung,

Fig. 7 die Fig. 6 entsprechenden Ergebnisse für eine Anordnung nach Fig. 5,

Fig. 8 die berechneten Linien konstanten Kontrastverhältnisses in Abhängigkeit von der Polarisatoreinstellung und dem Produkt Δ n x d für eine Anordnung mit einem Polarisator und einem Reflektor,

Fig. 9 die Fig. 8 entsprechenden Linien für eine Anordnung nach Fig. 5, und

Fig. 10 die Fig. 8 entsprechenden Linien für eine Anordnung nach Fig. 4.

Wege zur Ausführung der Erfindung

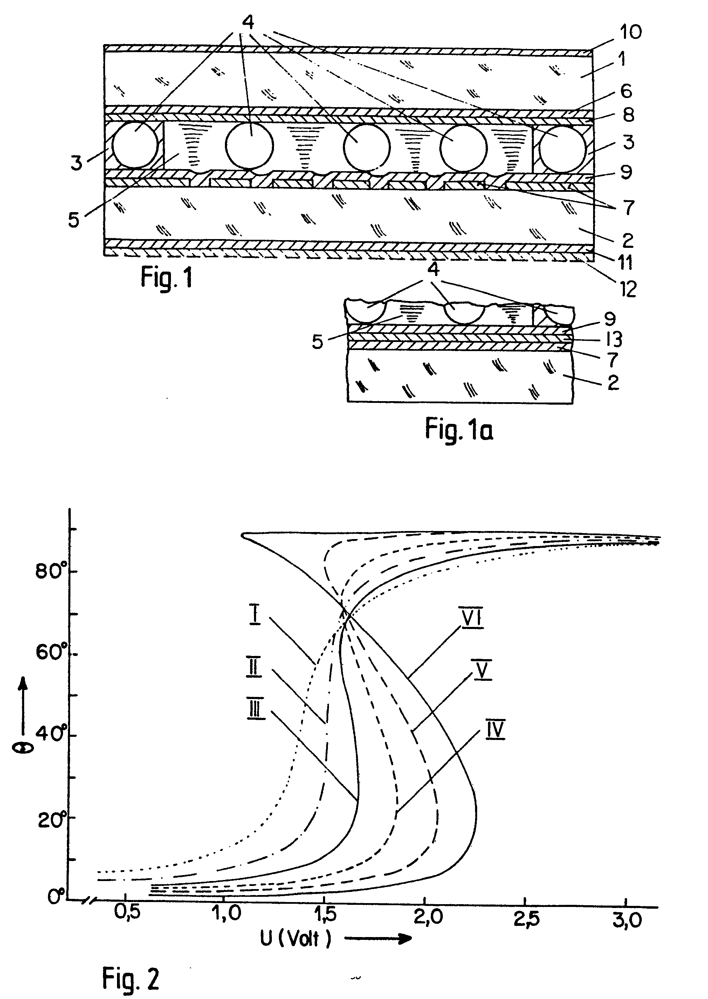

Die in Figur 1 dargestellte Flüssigkristallanzeige besteht aus zwei Trägerplatten 1 und 2 aus Glas, die mit einer Umrandung 3 eine Zelle bilden. Die Umrandung 3 besteht, wie üblich, aus einem Epoxy-Klebstoff, der Abstandshalter 4 aus Glasfasern enthält. Weitere Abstandshalter 4 sind zwischen den Trägerplatten 1 und 2 über die ganze Sichtfläche der Anzeige statistisch verteilt. In der Zelle ist ein nematischer Flüssigkristall 5 mit positiver dielektrischer Anisotropie eingefüllt, der einen chiralen Zusatz enthält. Die Innenseiten jeder Trägerplatte 1 und 2 besitzen parallele, streifenförmige Elektrodenschichten 6 und 7 aus $In_2O_3$, wobei die Richtung der Streifen auf der einen Trägerplatte 1 senkrecht zur Richtung der Streifen auf der anderen Trägerplatte 2 verläuft. Auf diese Art wird eine Anzeige aus Matrixpunkten gebildet. Jedoch sind auch andere Elektrodenformen möglich, wie z.B. die bekannte Siebensegment-Anordnung. Über die Elektrodenschichten 6 und 7 und die Zwischenräume zwischen diesen Elektrodenschichten sind Orientierungsschichten 8 und 9 aufgetragen. Auf der Aussenseite der vorderen Trägerplatte 1 ist ein aus einer Folie bestehender Linearpolarisator 10 aufgeklebt. Auf der Aussenseite der hinteren Trägerplatte 2 ist bei Transmissionsbetrieb ebenfalls ein Linearpolarisator 11 aufgeklebt. Für Reflexionsbetrieb ist hinter diesem Polarisator 11 ein diffus streuender, metallischer, externer Reflektor 12 angeordnet (strichliert angedeutet in Fig. 1). Ein solcher ist z.B. bekannt aus CH-B-618 018. Der Polarisator 11 kann jedoch auch weggelassen werden. Dadurch wird zwar die Helligkeit verbessert, der Kontrast jedoch geringer.

In Figur 1a ist der Fall dargestellt, wenn statt eines externen Reflektors 12 ein interner Reflektor 13 verwendet wird, wie er z.B. aus EP-B-060 380 bekannt ist. Wie der Ausschnitt zeigt, ist dieser Reflektor zwischen der Elektrodenschicht 7 und der Orientierungsschicht 9 angeordnet. Ansonsten sind ausser dem Polarisator 11 die gleichen Elemente wie in Figur 1 vorhanden.

Figur 2 stellt für einen typischen Flüssigkristall den theoretischen Zusammenhang zwischen dem Verkippungswinkel θ der lokalen optischen Achse (d.h. dem Direktor) des Flüssigkristalls in der Mitte der Zelle und der angelegten Betriebsspannung U dar. Der Winkel θ wird in bezug zur Trägerplatte gemessen. Der Verkippungswinkel des Flüssigkristalls an den Trägerplatten (Anstellwinkel) beträgt in beiden Fällen 28°. Der Parameter, die gesamte Verdrillung Φ des Flüssigkristalls innerhalb der Anzeigezelle, durchläuft dabei die Werte 210° (Kurve I), 240° (Kurve II), 270° (Kurve III), 300° (Kurve IV), 330° (Kurve V) und 360° (Kurve VI). Bei einer bestimmten Schichtdicke d des Flüssigkristalls ist die Ganghöhe p so gewählt, dass das Verhältnis d/p durch die folgende Formel beschrieben wird:

$$d/p = \Phi/360°. \qquad (1)$$

Dies gewährleistet, dass der Verdrillungszustand der Flüssigkristallschicht stabil ist und nicht um zusätzlich ± 180° verdreht, und dass keine optischen Störungen in der Anzeige auftreten. Die Werte 210°, 240°, 270°, 300°, 330° und 360° entsprechen daher einem Verhältnis d/p von 0,58, 0,67, 0,75, 0,91 und 1,0. Die Ganghöhe p ist dabei gemäss dem üblichen Sprachgebrauch definiert als Kenngrösse der Verdrillung, die in dem nematischen Flüssigkristall durch Zugabe des chiralen Zusatzes im ungestörten Zustand erzeugt wird, und wird bei Rechtsdrehung positiv, bei Linksdrehung dagegen negativ gezählt.

Erfindungswesentlich ist, dass das Verhältnis von Schichtdicke d zu Ganghöhe p des Flüssigkristalls dem Betrage nach im Bereich von 0,50 bis 0,95 liegt, bevorzugt zwischen 0,65 und 0,85. Die Ganghöhe p wird dadurch eingestellt, dass dem nematischen Flüssigkristall ein bestimmter Gewichtsanteil eines chiralen Zusatzes beigemischt wird. Dieser Anteil ist abhängig von der Art des Flüssigkristalls und des chiralen Zusatzes, und von der Schichtdicke d. Ferner ist es wichtig, dass mindestens eine der Orientierungsschichten 8 oder 9 die benachbarten Flüssigkristallmoleküle mit einem Anstellwinkel grösser als 5° ausrichtet, bevorzugt mit etwa 10° bis 40°. Dabei ist zu beachten, dass die Ausrichtung der Orientierungsschichten 8 und 9 mit dem natürlichen Drehsinn des mit dem chiralen Zusatz dotierten Flüssigkristalls 5 übereinstimmt. Weiterhin soll die Schichtdicke d kleiner als 10 μm und die gesamte Verdrillung innerhalb der Anzeigezelle dem Betrage nach zwischen 180° und 360° liegen, bevorzugt zwischen 240° und 300°. Dadurch wird gewährleistet, dass die Kennlinie der Anzeige, d.h. die Transmissionskurve bei angelegter Betriebsspannung, ausreichend steil ist und der Bereich des bistabilen Verhaltens derart eingeengt ist, dass mit Betriebsspannungen ausserhalb dieses Bereiches nach dem üblichen Multiplexverfahren (vgl. z.B. IEEE Trans. El. Dev., Vol. ED-21, No. 2, Febr. 1974, Seiten 146–155) angesteuert werden kann. Es wurde gefunden, dass innerhalb dieses Bereiches die Schaltzeiten mindestens hundert mal grösser sind als ausserhalb. Die Kennlinie der Anzeige hat einen ähnlichen Verlauf wie die Kurven in Fig. 2, ausser dass die negative Steigung der Kurve (Kurven III bis VI) durch einen bistabilen Bereich (Hystereseschleife) zu ersetzen ist.

Ein anderer wichtiger Punkt ist, dass das Produkt von Doppelbrechung Δ n und Schichtdicke d des Flüssigkristalls in dem Bereich von 0,6 μm bis 1,4 μm liegt, bevorzugt zwischen 0,8 μm und 1,2 μm.

Die Funktionsweise der erfindungsgemässen Flüssigkristallanzeige in Transmission lässt sich nun wie folgt erklären: Das durch den Linearpolarisator 10 linear polarisierte Licht durchsetzt die Trägerplatte 1 und trifft unter einem Winkel zu dem an der Orientierungsschicht 8 ausgerichteten Flüssigkristall auf. Wegen der gesamten Verdrillung und der doppelbrechenden Eigenschaften des Flüssigkristalls wird das ursprünglich linear polarisierte Licht elliptisch polarisiert, und zwar unterschiedlich je nach angelegter Betriebsspannung. Die Orientierungsrichtung der Orientierungsschicht 9 und die Schwingungsrichtung des hinteren Linearpolarisators 11 bilden ebenfalls einen bestimmten Winkel. Unter der Orientierungsrichtung wird hierbei die Projektion der lokalen optischen Achse des Flüssigkristalls in unmittelbarer Nähe der Orientierungsschicht auf die Ebene der Orientierungsschicht verstanden. Die Schwingungsrichtung ist diejenige Richtung, in welcher der elektrische Feldvektor schwingt. Das aus dem Flüssigkristall austretende, elliptisch polarisierte Licht wird im hinteren Polarisator 11 entweder fast vollständig oder kaum absorbiert, je nach dem ob die Hauptachse des elliptisch polarisierten Lichts senkrecht oder parallel zur Schwingungsrichtung des Polarisators 11 steht. Durch geeignete Wahl der obengenannten Winkel zwischen den Orientierungsschichten 8 und 9 und den Polarisatoren 10 und 11 wird ein optimaler Kontrast erreicht. Diese Winkel haben einen Betrag zwischen 20° und 70°, bevorzugt zwischen 30° und 60°, wobei der Drehsinn sowohl mit dem Uhrzeigersinn als auch mit dem Gegen-Uhrzeigersinn zusammenfallen kann. Dabei ist der Uhrzeigersinn in bezug auf die Einfallsrichtung des Lichts und der Winkel in bezug auf die Orientierungsrichtung bestimmt.

Im Reflexionsbetrieb ist die Wirkungsweise im wesentlichen gleich wie bei der Transmission. Insbesondere wird der optimale Kontrast bei nur einem Polarisator 10 durch geeignete Wahl des Winkels zwischen der Schwingungsrichtung des vorderen Linearpolarisators 10 und der Orientierungsrichtung der ersten Orientierungsschicht 8 bestimmt.

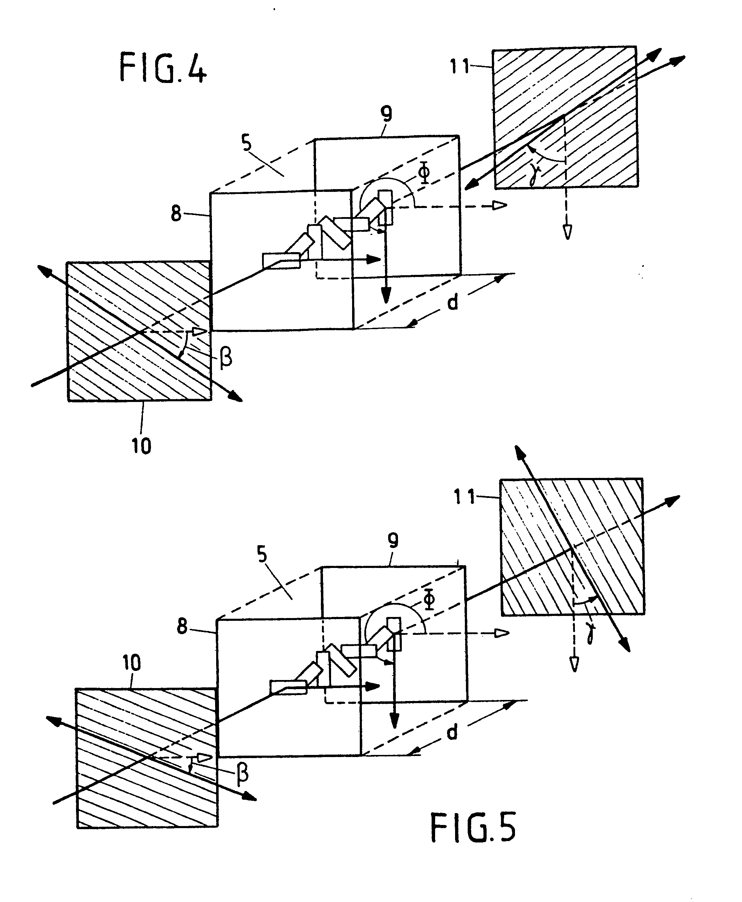

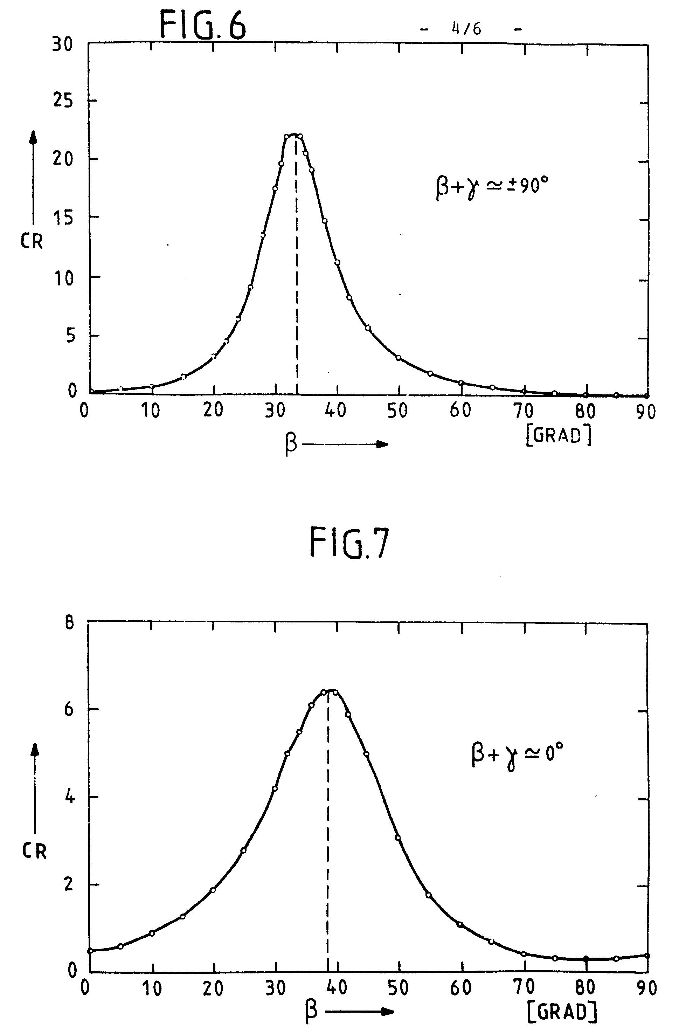

Da die erwähnten Winkel zwischen den Schwingungsrichtungen der Polarisatoren 10, 11 und den Orientierungsrichtungen der Orientierungsschichten 8, 9 für das Erreichen eines optimalen Kontrastverhältnisses CR eine wesentliche Rolle spielen, werden diese Winkel durch die schematischen Anordnungen in den Figuren 4 und 5 in ihrer Zählweise noch einmal näher erläutert.

Die Figuren 4 und 5 zeigen in explosionsartiger, perspektivischer Darstellung die Anordnung der Polarisatoren 10 und 11, der Orientierungsschichten 8 und 9 sowie den zwischen den Orientierungsschichten befindlichen Flüssigkristall 5, dessen Verdrillung Φ durch eine Kette von schematisierten Flüssigkristallmolekülen in Form rechteckiger Plättchen veranschaulicht wird. Trägerplatten, Umrandung und mögliche Reflektoren sind der Übersichtlichkeit halber weggelassen.

Die Elemente der Zelle sind entlang einer Achse der Zelle angeordnet, die in Richtung des einfallenden Lichts zeigt. Die Schwingungsrichtungen der Polarisatoren 10 und 11 sowie die Orientierungsrichtungen der Orientierungsschichten 8 und 9 sind jeweils durch ausgezogene Pfeile angedeutet, die in den entsprechenden Ebenen senkrecht zur genannten Achse der Zelle liegen.

Durch diese gerichtete Achse bzw. die Einfallsrichtung des Lichts wird ein rechtshändiges System definiert, in dem die auftretenden Winkel im Uhrzeigersinn positiv, andernfalls negativ gezählt werden. In den Fällen der Figuren 4 und 5 bilden daher die beispielshaft eingezeichneten Flüssigkristallmoleküle eine Linksschraube, die, von der vorderen Orientierungsschicht 8 ausgehend, eine Verdrillung $\Phi$ von $-270°$ aufweist.

Die Schwingungsrichtungen der Polarisatoren 10 und 11 sind aus den in die Polarisatorebenen gestrichelt eingezeichneten Orientierungsrichtungen der Orientierungsschichten 8 und 9 um einen Winkel $\beta$ bzw. $\gamma$ herausgedreht. In der Anordnung nach Fig. 4 sind die Winkel $\beta$ und $\gamma$ jeweils positiv. In der Anordnung nach Fig. 5 ist nur $\beta$ positiv, $\gamma$ dagegen negativ. Die nachfolgenden Winkelangaben beziehen sich stets auf die in Fig. 4 und 5 getroffene Festlegung.

Die Erfindung hat sich bewährt bei einer reflektiven Anzeigezelle mit einer Schichtdicke d von 7,6 µm und einer gesamten Verdrillung $\Phi$ des Flüssigkristalls von $-270°$. Das Verhältnis d/p beträgt hier $-0,75$. Die erste Orientierungsschicht 8 ist durch schräges Aufdampfen mit SiO unter einem Winkel von 5° zur Plattenebene hergestellt, so dass die benachbarten Flüssigkristallmoleküle derart ausgerichtet sind, dass der Anstellwinkel zwischen der lokalen optischen Achse des Flüssigkristalls an der Orientierungsschicht und der Projektion dieser optischen Achse auf die Plattenebene, d.h. der Orientierungsrichtung, 28° beträgt. Die Schwingungsrichtung des vorderen Polarisators 10 und die Orientierungsrichtung der Orientierungsschicht 8 bilden einen Winkel von etwa 30°. Die zweite Orientierungsschicht 9 ist eine geriebene Polymerschicht und ergibt einen Anstellwinkel von 1°. Jedoch ist eine ähnliche Orientierungsschicht wie die erste ebenfalls möglich. Der Flüssigkristall 5 besteht aus der nematischen Mischung ZLI–1840 der Firma Merck, BRD, und 2,05 Gewichtsprozent des chiralen Zusatzes Cholesteryl Nonanoat. Dieser Flüssigkristall besitzt eine positive dielektrische Anisotropie von $+12,2$ und eine Doppelbrechung von 0,15. Der Temperaturbereich erstreckt sich von 258 K bis 363 K, die Viskosität beträgt $1,18 \cdot 10^{-4}$ m²/s bei 273 K und $3,1 \cdot 10^{-3}$ m²/s bei 293 K.

Mit dieser Anzeigezelle werden 96 Zeilen nach dem üblichen Multiplexverfahren angesteuert. Die Betriebsspannungen sind 1,90 V für den nicht-angesteuerten Zustand (dunkel) und 2,10 V für den angesteuerten Zustand (hell). Die Anzeige ist im hellen Zustand völlig achromatisch, im dunklen Zustand tief blau. Wenn zusätzlich eine optische Verzögerungsplatte, wie z.B. eine $\lambda/4$-Platte, zwischen dem vorderen Linearpolarisator 10 und der vorderen Trägerplatte 1 verwendet wird, kann die Farbe der Anzeige entsprechend geändert werden. Sie besitzt einen hervorragenden Blickwinkelbereich unabhängig von der Beleuchtungsrichtung. Die Ein- und Ausschaltzeiten der Anzeige betragen 0,4 s bei 296 K.

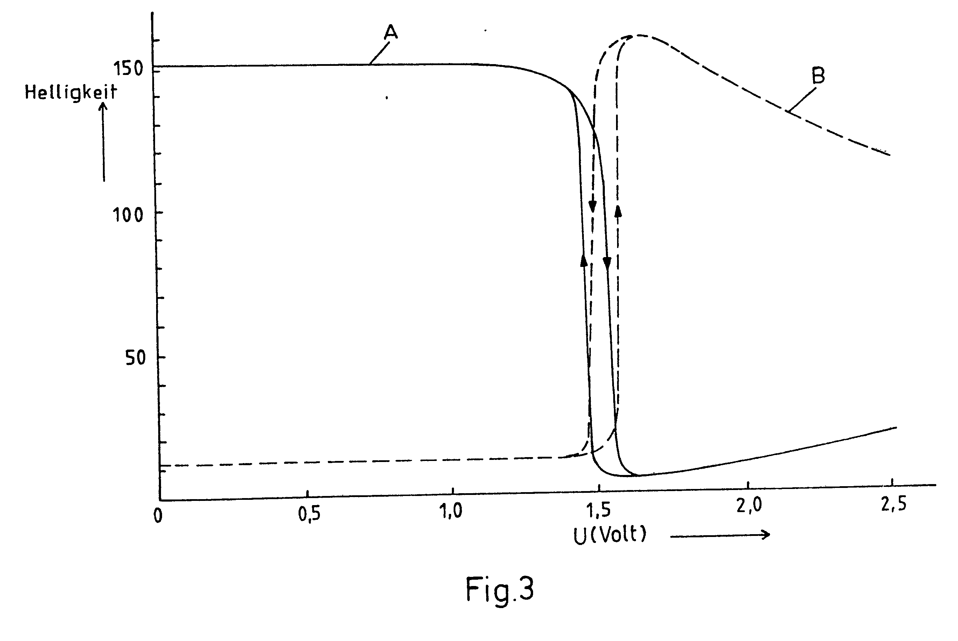

Eine andere besonders bevorzugte Ausführungsform der Erfindung besteht aus einer reflektiven Anzeigezelle mit einer 0,7 mm dicken Trägerplatte 1 und einer 0,5 mm dicken Trägerplatte 2. Die Schichtdicke d beträgt 6,5 µm. Bei dieser Anzeigezelle sind ein vorderer Polarisator 10, ein hinterer Polarisator 11 und ein externer Reflektor 12 vorgesehen. Die beiden Orientierungsschichten 8 und 9 sind durch schräges Aufdampfen mit SiO unter einem Winkel von 5° zur Plattenebene hergestellt und richten die benachbarten Flüssigkristallmoleküle derart aus, dass die optische Achse des Flüssigkristalls einen Anstellwinkel von 28° zur Plattenebene bildet. Die Orientierungsschichten 8 und 9 sind so angeordnet, dass die gesamte Verdrillung $\Phi$ eine linkshändige Drehung von $-250°$ macht. Als Flüssigkristall 5 ist die nematische Mischung ZLI–1840 mit einem chiralen Zusatz von 2,56 Gewichtsprozent Cholesteryl Nonanoat in die Zelle eingefüllt. Die Doppelbrechung $\Delta n$ von ZLI–1840 beträgt 0,15, so dass das Produkt $\Delta n \cdot d = 0,975$ µm ist. Der Winkel $\beta$ zwischen der Schwingungsrichtung des vorderen Linearpolarisators 10 und der Orientierungsrichtung der zugehörigen Orientierungsschicht 8 und der Winkel $\gamma$ zwischen der Schwingungsrichtung des hinteren Linearpolarisators 11 und der Orientierungsrichtung der zugehörigen Orientierungsschicht 9 betragen $\pm 45°$. In Fig. 3 sind die Konstrastkurven angegeben für den Fall, dass beide Winkel 45° oder beide Winkel $-45°$ sind (Kurve A), und für den Fall, dass der eine Winkel 45° und der andere Winkel $-45°$ ist, oder umgekehrt (Kurve B). Die Abszisse gibt dabei die angelegte Spannung U in Volt an, die Ordinate die Helligkeit der Anzeige in willkürlichen Einheiten. Im ersten Fall (Kurve A) erhält man im nicht-angewählten Zustand eine hell-gelbe Anzeige, im angewählten Zustand eine schwarze Anzeige. Diesem Fall entspricht die Anordnung nach Fig. 4, in der die beiden Winkel $\beta$ und $\gamma$ gleichsinnig positiv oder negativ gewählt werden (gelber Mode). Im zweiten Fall (Kurve B) erhält man eine dunkel-violette Anzeige im nicht-angewählten Zustand, eine helle Anzeige im angewählten Zustand. Diesem Fall entspricht die Anordnung nach Fig. 5, in der die Winkel $\beta$ und $\gamma$ gegensinnig gewählt werden (blauer Mode). Die Messungen wurden ausgeführt bei senkrecht einfallendem Licht mit einem Photometer der Firma Tektronix, Modell J 6523. Dieses Photometer berücksichtigt die spektrale Empfindlichkeit des menschlichen Auges. Die Rampe beträgt 30 mV/sec. Die gemessenen Kontrastverhältnisse bei einem Multiplexgrad von 100:1 sind wie folgt:

Kurve A  $V_s = 1,580$ V
$V_{ns} = 1,429$ V  Kontrastverhältnis $= 19,8$
Kurve B  $V_s = 1,609$ V
$V_{ns} = 1,456$ V  Kontrastverhältnis $= 11,8$

Die Spannungen $V_s$ und $V_{ns}$ sind die üblichen angewählten und nicht-angewählten Ansteuerspannungen nach dem vorgenannten Artikel IEEE Trans. El. Dev. Das Verhältnis $V_s/V_{ns}$ ist dann 1,106 bei einem Multiplexgrad von 100:1.

Bei der Verwendung von zwei Polarisatoren mit den Winkeln β und γ relativ zu den Orientierungsrichtungen gemäss Fig. 4 und 5 wurden nun allgemeine Bedingungen gefunden, die für ein optimiertes Kontrastverhältnis CR erfüllt sein sollten. Diese Bedingungen können wie folgt beschrieben werden:

(2) $\beta + \gamma \sim \pm 90°$       (Fig. 4)

oder

(3) $\beta + \gamma \sim 0°$       (Fig. 5)

In beiden Fällen ist der Bereich der Winkelbeträge derart beschränkt, dass $20° \leqslant /\beta/ \leqslant 70°$ und $20° \leqslant /\gamma/ \leqslant 70°$ gilt.

Ist die Bedingung (2) erfüllt (z.B. $\beta = \gamma = \pm 45°$), erhält man (Kurve A aus Fig. 3) im nicht-angewählten Zustand die hell-gelbe Anzeige (gelber Mode). Ist dagegen die Bedingung (3) erfüllt, erhält man (Kurve B aus Fig. 3) im nicht-angewählten Zustand die dunkel-violette Anzeige (blauer Mode).

Dass die Bedingungen (2) und (3) keine hinreichenden Bedingungen für ein optimales Kontrastverhältnis sind, geht aus den Kurven der Figuren 6 und 7 hervor, die das gemessene Kontrastverhältnis CR in Abhängigkeit vom Winkel β unter der Bedingung (2) oder (3) für eine Zelle mit zwei Linearpolarisatoren im Transmissionsbetrieb zeigen.

Bei diesen Messungen wurde eine Flüssigkristallmischung aus 95,6% ZLI–2392 (Merck), 2,5% S 811 (Merck) und 1,9% CB 15 (BDH) verwendet. Die Verdrillung betrug −270°, der Anstellwinkel 24°, die Schichtdicke 6,3 μm und die Doppelbrechung Δ n war 0,15.

Die in Fig. 6 dargestellten Ergebnisse gelten für den gelben Mode ($\beta + \gamma \sim \pm 90°$), die aus Fig. 7 entsprechend für den blauen Mode ($\beta + \gamma \sim 0°$). Man erkennt, dass der Winkel β beim gelben Mode für ein maximales Kontrastverhältnis CR von etwa 22:1 bei ungefähr 32° liegt und daher deutlich von 0° abweicht.

Im blauen Mode (Fig. 7) ist das maximale Kontrastverhältnis CR mit etwa 6,5:1 deutlich geringer. Auch hier beträgt β etwa 38° und liegt damit in einem nicht erwarteten Winkelbereich.

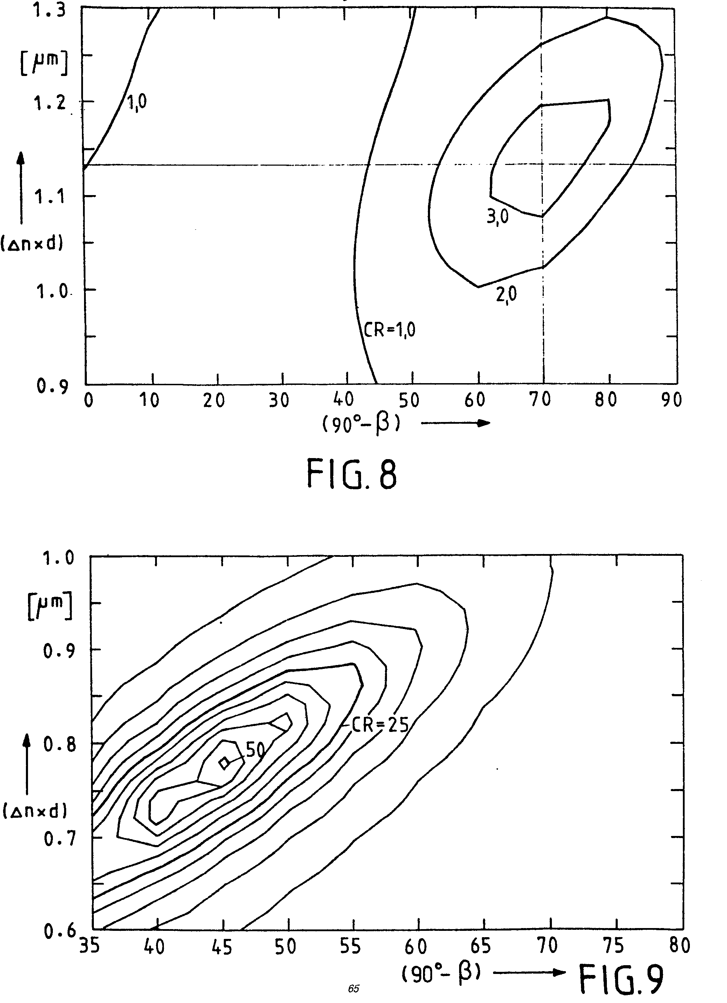

Die mit einem optimalen Kontrastverhältnis CR verknüpften überraschenden Werte für den Winkel β werden durch nachträgliche theoretische Berechnungen bestätigt, deren Ergebnisse in den Figuren 8–10 als Linien mit konstantem Kontrastverhältnis in Abhängigkeit von dem Produkt aus Schichtdicke d und Doppelbrechung Δ n sowie vom Winkel β dargestellt sind.

Für die Berechnung ist ein Multiplexverhältnis von 100:1 vorausgesetzt, eine Schichtdicke von d=6,2 μm, ein Brechungsindex $n_o$ für den ordentlichen Strahl von 1,5, elastische Flüssigkristallkonstanten von $k_{33}/k_{22}=2,5$, $k_{33}/k_{11}=1,5$, ein Verhältnis der dielektrischen Konstanten von $(\varepsilon_{||} - \varepsilon_{\perp})/\varepsilon_{\perp}=2,5$, eine Verdrillung von $\Phi=-270°$

sowie ein Verhältnis von Schichtdicke zu Ganghöhe von d/p=−0,75.

Die Fig. 8 macht deutlich, dass im Falle einer im Reflexionsbetrieb mit einem Polarisator arbeitenden Zelle ein maximales Kontrastverhältnis CR von etwa 3,6:1 nur dann erreicht wird, wenn der Winkel β etwa 20° und Δ n x d ungefähr 1,13 μm betragen. Es wurde in diesem Fall im übrigen ein Anstellwinkel von jeweils 28° angenommen.

Im blauen Mode einer mit zwei Polarisatoren im Reflexionsbetrieb arbeitenden Anzeigezelle (Fig. 9) erhält man entsprechende Werte von β $\sim$ 45° und Δ n x d $\sim$ 0,78 μm.

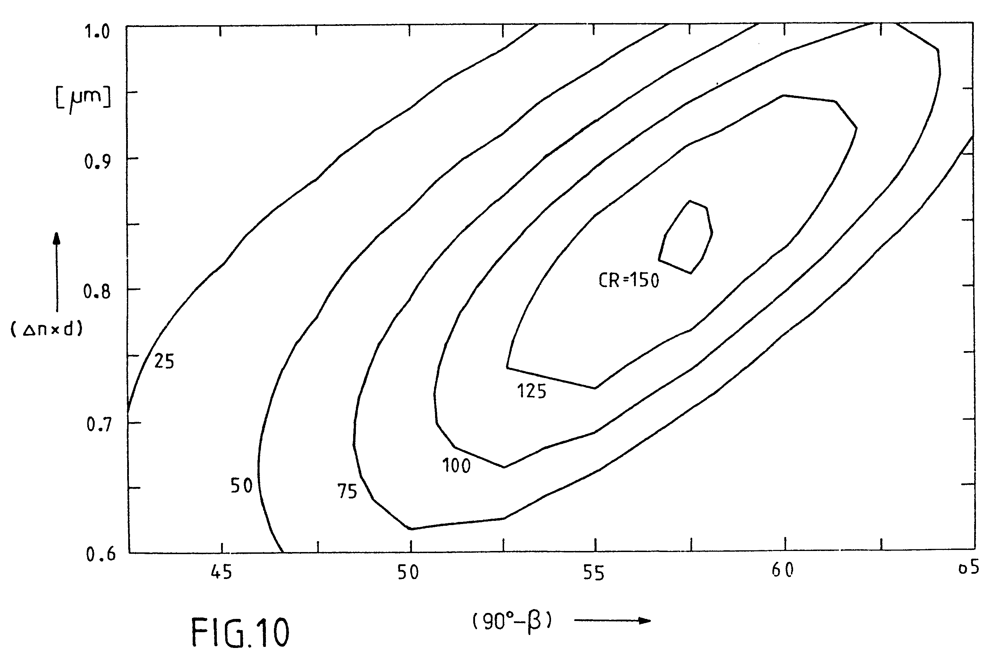

Im zugehörigen gelben Mode (Fig. 10) ergeben sich schliesslich Werte von β $\sim$ 32,5° und Δ n x d $\sim$ 0,84 μm. In den beiden letztgenannten Fällen ist dabei ein Anstellwinkel von jeweils 20° angenommen worden.

Die theoretisch berechneten optimalen Kontrastverhältnisse von 50 und 150 liegen deutlich höher als die gemessenen, weil in der Rechnung Reflexionsbetrieb angenommen worden ist, der wegen der doppelten Ausnutzung der Polarisatoren gegenüber dem Transmissionsbetrieb ein besseres Kontrastverhältnis ergibt.

Insgesamt ermöglicht die Erfindung eine hochmultiplexierbare, kontrastreiche und schnelle Flüssigkristallanzeige mit grossem Sichtwinkelbereich, die zudem in der bei den üblichen TN (Twisted Nematic)-Zellen erprobten Technologie hergestellt werden kann.

**Patentansprüche**

1. Multiplexierbare Flüssigkristallanzeige mit
– zwei planparallelen Trägerplatten (1, 2), die mit einer Umrandung (3) eine Zelle bilden,
– einem in die Zelle eingefüllten nematischen Flüssigkristall (5) mit positiver dielektrischer Anisotropie und einem chiralen Zusatz,
– Elektrodenschichten (6, 7) auf den Innenseiten der Trägerplatten (1, 2),
– darüberliegenden Orientierungsschichten (8, 9), zwischen denen sich der Flüssigkristall (5) in verdrillter Konfiguration mit einer auf der Plattenebene senkrechten Verdrillungsachse anordnet, und von denen mindestens eine die benachbarten Flüssigkristallmoleküle derart ausrichtet, dass die lokale optische Achse des Flüssigkristalls an dieser einen Orientierungsschicht einen Anstellwinkel von grösser als 5° zur Plattenebene bildet,
– mindestens einem Polarisator (10) in einer derartigen Anordnung, dass das Licht zwischen Ein- und Austritt wenigstens zweimal einen Polarisator passiert, und einer Schichtdicke (d) des Flüssigkristalls (5) von weniger als 10 μm, dadurch gekennzeichnet, dass
– die Verdrillung (Φ) des Flüssigkristalls (5) in der Zelle von Orientierungsschicht zu Orientierungsschicht dem Betrag nach grösser oder gleich 180° und kleiner als 360° ist,
– das Verhältnis zwischen Schichtdicke (d) und Ganghöhe (p) des Flüssigkristalls (5) dem Betrag nach grösser oder gleich 0,50 und kleiner oder gleich 0,95 ist,

– die Schwingungsrichtung mindestens des vorderen Polarisators (10) mit der Orientierungsrichtung der vorderen Orientierungsschicht (8) einen derartigen Winkel bildet, dass das ursprünglich linear polarisierte Licht durch die Verdrillung ($\Phi$) und die Doppelbrechung ($\Delta n$) des Flüssigkristalls (5) je nach anliegender Betriebsspannung unterschiedlich elliptisch polarisiert und der Kontrast der Anzeige optimiert ist,

– das Umschalten der Anzeige durch den direkten Übergang von einer ersten zu einer zweiten Betriebsspannung erfolgt, und diese beiden Betriebsspannungen ausserhalb eines etwaigen Bistabilitätsbereiches der Anzeige liegen, und

– über die Sichtfläche der Anzeige Abstandshalter (4) verteilt sind.

2. Flüssigkristallanzeige nach Anspruch 1, dadurch gekennzeichnet, dass das Produkt von Doppelbrechung ($\Delta n$) und Schichtdicke (d) zwischen 0,60 µm und 1,40 µm, vorzugsweise zwischen 0,80 µm und 1,20 µm liegt.

3. Flüssigkristallanzeige nach Anspruch 2, dadurch gekennzeichnet, dass die Verdrillung des Flüssigkristalls (5) in der Zelle dem Betrage nach zwischen 240° und 300° liegt, bevorzugt bei etwa 270°.

4. Flüssigkristallanzeige nach Anspruch 3, dadurch gekennzeichnet, dass die dielektrische Anisotropie des Flüssigkristalls (5) grösser oder gleich 5 ist.

5. Flüssigkristallanzeige nach Anspruch 1, dadurch gekennzeichnet, dass der Anstellwinkel an der anderen Orientierungsschicht kleiner als 5° ist.

6. Flüssigkristallanzeige nach einem der Ansprüche 1 bis 5, dadurch gekennzeichnet, dass nur ein vorderer Polarisator (10) und auf der hinteren Trägerplatte (2) ein metallischer, diffus spiegelnder Reflektor (12, 13) vorgesehen sind, und die Schwingungsrichtung des vorderen Polarisators (10) mit der Orientierungsrichtung der vorderen Orientierungsschicht (8) einen bestimmten Winkel, z.B. von etwa 30° bildet.

7. Flüssigkristallanzeige nach einem der Ansprüche 1 bis 5, dadurch gekennzeichnet, dass zwei Polarisatoren (10, 11) vorgesehen sind, und sowohl die Schwingungsrichtung des vorderen Polarisators (10) mit der Orientierungsrichtung der vorderen Orientierungsschicht (8), als auch die Schwingungsrichtung des hinteren Polarisators (11) mit der Orientierungsrichtung der hinteren Orientierungsschicht (9) jeweils einen bestimmten Winkel ($\beta$, $\gamma$) bilden.

8. Flüssigkristallanzeige nach Anspruch 6 oder 7, dadurch gekennzeichnet, dass die Beträge der Winkel ($\beta$, $\gamma$) zwischen der Schwingungsrichtung des Linearpolarisators (10, 11) und der Orientierungsrichtung der zugehörigen Orientierungsschicht (8, 9) oberhalb 20° liegen.

9. Flüssigkristallanzeige nach Anspruch 6 oder 7, dadurch gekennzeichnet, dass die Beträge der Winkel ($\beta$, $\gamma$) jeweils zwischen 20° und 70°, vorzugsweise zwischen 30° und 60° liegen.

10. Flüssigkristallanzeige nach Anspruch 7 oder 8, dadurch gekennzeichnet, dass hinter dem hinteren Polarisator (11) ein metallischer, diffus spiegelnder Reflektor (12) vorgesehen ist.

11. Flüssigkristallanzeige nach einem der Ansprüche 7 bis 9, dadurch gekennzeichnet, dass die Summe aus dem ersten Winkel ($\beta$) und dem zweiten ($\gamma$) entweder ungefähr gleich $\pm$ 90° oder ungefähr gleich 0° ist, wobei die Winkel in Richtung des einfallenden Lichts im Uhrzeigersinn positiv gezählt werden.

**Revendications**

1. Elément d'affichage multiplexable à cristal liquide, comportant

– deux lames de base (1, 2) planes parallèles qui, avec un bourrelet (3), forment une cellule,

– un cristal liquide (5) nématique remplissant la cellule, présentant une anisotropie diélectrique positive et un additif chiral,

– des couches-électrodes (6, 7) appliquées sur les faces intérieures des lames de base (1, 2),

– des couches d'orientation (8, 9) posées pardessus, entre lesquelles se place le cristal liquide (5) dans une configuration torsadée avec un axe de torsion perpendiculaire au plan des lames, et dont au moins une couche aligne les molécules voisines dans le cristal liquide de telle façon que l'axe optique local du cristal liquide à cette couche d'orientation forme un angle d'inclinaison de plus de 5° avec le plan des lames,

– au moins un polariseur (10) agencé de telle façon que la lumière, entre l'entrée et la sortie, traverse au moins deux fois un polariseur, et

– une épaisseur de couche (d) du cristal liquide (5) de moins de 10 µm, caractérisé en ce que

– la torsion ($\Phi$) du cristal liquide (5) à l'intérieur de la cellule, d'une couche d'orientation à l'autre couche d'orientation, a une valeur absolue supérieure ou égale à 180° et inférieure à 360°,

– le rapport entre l'épaisseur de couche (d) et le pas (p) du cristal liquide (5) a une valeur absolue supérieure ou égale à 0,50 et inférieure ou égale à 0,95,

– la direction d'oscillation au moins du polariseur antérieur (10) forme avec la direction d'orientation de la couche d'orientation (8) antérieure un angle tel que la lumière qui, initialement, est polarisée linéairement acquiert, du fait de la torsion ($\Phi$) et de la biréfringence ($\Delta n$) du cristal liquide (5), une polarisation elliptique différente selon la tension de service appliquée et que le contraste de l'élément d'affichage est optimisé,

– la commutation de l'élément d'affichage est effectuée par le passage direct d'une première à une seconde tension de service, et que ces deux tensions de service sont situées hors d'un quelconque domaine de bistabilité de l'élément d'affichage,

– des séparateurs (4) sond répartis sur la surface visible de l'élément d'affichage.

2. Elément d'affichage à cristal liquide suivant la revendication 1, caractérisé en ce que le produit de la biréfringence ($\Delta n$) et de l'épaisseur de couche (d) est compris entre 0,60 µm et 1,40 µm, et de préférence entre 0,80 µm et 1,20 µm.

3. Elément d'affichage à cristal liquide suivant la revendication 2, caractérisé en ce que la torsion du cristal liquide (5) à l'intérieur de la cellule a une valeur absolue comprise entre 240° et 300°, et de préférence voisine d'environ 270°.

4. Elément d'affichage à cristal liquide suivant la revendication 3, caractérisé en ce que l'anisotropie diélectrique du cristal liquide (5) est supérieure ou égale à 5.

5. Elément d'affichage à cristal liquide suivant la revendication 1, caractérisée en ce que l'angle d'inclinaison sur l'autre couche d'orientation est inférieur à 5°.

6. Elément d'affichage à cristal liquide suivant une quelconque des revendications 1 à 5, caractérisé en ce qu'il n'est prévu qu'un seul polariseur antérieur (10), et un réflecteur (12, 13) métallique à réflecion diffuse situé sur la lame des base (2) postérieure, et en ce que la direction d'oscillation du polariseur antérieur (10) forme avec la direction d'orientation de la couche d'orientation antérieure (8) un angle déterminé, p.ex. d'environ 30°.

7. Elément d'affichage à cristal liquide suivant une quelconque des revendications 1 à 5, caractérisé en ce qu'il est prévu deux polariseurs (10, 11) et qu'aussi bien la direction d'oscillation du polariseur antérieur (10) que la direction d'oscillation du polariseur postérieur (11) forment, respectivement avec la direction d'orientation de la couche d'orientation (8) antérieure ou avec la direction d'orientation de la couche d'orientation (9) postérieure, un angle déterminé ($\beta$, $\gamma$).

8. Elément d'affichage à cristal liquide suivant la revendication 6 ou 7, caractérisé en ce que les valeurs absolues des angles ($\beta$, $\gamma$), entre la direction d'oscillation du polariseur linéaire (10, 11) et la direction d'orientation de la couche d'orientation (8, 9) correspondante sont supérieures à 20°.

9. Elément d'affichage à cristal liquide suivant la revendication 6 ou 7, caractérisé en ce que les valeurs absolues des angles ($\beta$, $\gamma$) sont toujours comprises entre 20° et 70°, et de préférence entre 30° et 60°.

10. Elément d'affichage à cristal liquide suivant la revendication 7 ou 8, caractérisé en ce qu'il est prévu un réflecteur (12) métallique, à réflexion diffuse, derrière le polariseur postérieur (11).

11. Elément d'affichage à cristal liquide suivant une quelconque des revendications 7 à 9, caractérisé en ce que la somme du premier angle ($\beta$) et du second angle ($\gamma$) est égale soit à environ ±90° soit à environ 0°, les angles étant considérés comme positifs dans le sens horaire suivant la direction de la lumière incidente.

**Claims**

1. Multiplexible liquid crystal display having
   - two plane-parallel support plates (1, 2) which form a cell with a border (3),
   - a nematic liquid crystal (5) filled into the cell, with positive dielectric anisotropy and a chiral additive,
   - electrode layers (6, 7) on the inner surfaces of the support plates (1, 2),
   - orientation layers (8, 9) overlying said electrode layers, between which the liquid crystal (5) is arranged in twisted configuration with an axis of twist at right angles to the plane of the plates, at least one of the said orientation layers aligning the adjoining liquid crystal molecules in such a way that the local optical axis of the liquid crystal at this orientation layer has a tilt angle of more than 5° with respect to the plane of the plate,
   - at least one polarizer (10) arranged so that the light passes a polarizer at least twice between entry and exit, and
   - a layer thickness (d) of the liquid crystal (5) of less than 10 µm, characterized in that
   - the absolute value of the twist ($\varphi$) of the liquid crystal (5) in the cell from one orientation layer to another is greater than or equal to 180° and less than 360°,
   - the absolute value of the ratio of layer thickness (d) to pitch (p) of the liquid crystal (5) is greater than or equal to 0.50 and less than or equal to 0.95,
   - the direction of vibration of at least the front polarizer (10) forms an angle with the direction for orientation of the front orientation layer (8) such that, depending on the applied operating voltage, the originally linearly polarized light becomes elliptically polarized to different extents because of the twist ($\varphi$) and the birefringence ($\Delta n$) of the liquid crystal (5), and the contrast of the display is optimized,
   - the display is switched over by the direct transition from a first to a second operating voltage, and these two voltages are outside any bistability range of the display, and
   - spacers (4) are distributed over the area of the layer of the display.

2. Liquid crystal display according to claim 1, characterized in that the product of birefringence ($\Delta n$) and layer thickness (d) is between 0.60 µm, and 1.40 µm preferably between 0.80 µm and 1.20 µm.

3. Liquid crystal display according to claim 2, characterized in that the absolute value of the twist angle of the liquid crystal (5) in the cell is between 240° and 300°, preferably about 270°.

4. Liquid crystal display according to claim 3, characterized in that the dielectric anisotropy of the liquid crystal (5) is greater than or equal to 5.

5. Liquid crystal display according to claim 1, characterized in that the tilt angle at the other orientation layer is less than 5°.

6. Liquid crystal display according to any of claims 1 to 5, characterized in that only one front polarizer (10) and, on the rear base plate (2), a metallic diffusely reflecting reflector (12, 13) are provided, and the direction of vibration of the front polarizer (10) forms a certain angle, for example about 30°, with the direction of orientation of the front orientation layer (8).

7. Liquid crystal display according to any of claims 1 to 5, characterized in that two polarizers (10, 11) are provided, and both the angle between the direction of vibration of the front polarizer (10) and the direction of orientation of the front orientation layer (8), and that between the direction of vibration of the rear polarizer (11) and the direction of orientation of the rear orientation layer (9), have a certain value ($\beta$, $\gamma$).

8. Liquid crystal display according to claims 6 or 7, characterized in that the absolute values of the angles ($\beta$, $\gamma$) between the direction of vibration of the linear polarizer (10, 11) and the direction of orientation of the associated orientation layer (8, 9) are greater than 20°.

9. Liquid crystal display according to claims 6 or 7, characterized in that the absolute values of the angles ($\beta$, $\gamma$) are each between 20° and 70°, preferably between 30° and 60°.

10. Liquid crystal display according to claims 7 or 8, characterized in that a metallic, diffusely reflecting reflector (12) is provided behind the rear polarizer (11).

11. Liquid crystal display according to any of claims 7 to 9, characterized in that the sum of the first angle ($\beta$) and the second angle ($\gamma$) is either about ±90° or about 0°, the angles being counted as positive in the clockwise sense in the direction of the incident light.

Fig. 1

Fig. 1a

Fig. 2

Fig.3

0 131 216

# FIG.4

# FIG.5

# FIG.6

$\beta + \gamma \simeq \pm 90°$

# FIG.7

$\beta + \gamma \simeq 0°$

FIG. 8

FIG. 9

FIG.10